# EUROPEAN PATENT SPECIFICATION

(11) **EP 1 827 178 B1**
(45) Date of publication and mention of the grant of the patent: **13.01.2010**
(21) Application number: 05810700.4
(22) Date of filing: 11.11.2005
(51) Int. Cl.: A47G 19/16

(54) **INFUSING DEVICE**
AUFGUSSVORRICHTUNG
DISPOSITIF D' INFUSION

(30) Priority: 13.11.2004 GB 0425221; 21.04.2005 GB 0508038
(43) Date of publication of application: 05.09.2007
(73) Proprietor: Almond, Martin John, Buckfastleigh Devon TQ11 0BL (GB)
(72) Inventor: Almond, Martin John, Buckfastleigh Devon TQ11 0BL (GB)
(74) Representative: Craske, Stephen Allan
(86) International application number: PCT/GB2005/004371
(87) International publication number: WO 2006/051322

(56) References cited:
- DE-U1- 9 016 740
- GB-A- 578 469
- GB-A- 191 022 650
- US-A- 2 678 000

## Description

### TECHNICAL FIELD OF THE INVENTION

This invention relates to a device for use in the infusion of various substances. The device is particularly useful in the preparation of beverages formed from infusions of tea, coffee, herbs etc., although it could also be used for making infusions of any infusible substances which can be contained in a porous bag.

### BACKGROUND

When making tea with tea bags for example, people often squeeze and agitate the tea bag by means of a spoon in order to expel the concentrated liquid and obtain a stronger infusion. Some people are also in the habit of squeezing tea bags after use in an attempt to reduce the risk of drips and dribbles as the bags are removed to a waste container.

Numerous devices for squeezing tea bags have been proposed. The most common forms of device act like a pair of tongs, but the parts that grip the bag are generally rigid and often have a large surface area. If the device holds the bag while the contents is infusing it may prevent water from circulating around the bag, but on the other hand, if the device is not used to hold the bag during infusion it then becomes difficult to grip the bag in order to remove it from the water.

A squeezing device has also been proposed having a cylindrical container provided with an end cap, and a similar squeezing device is disclosed in GB 22 650**.** The container has a perforated wall and contains a reciprocable plunger which can be used to squeeze a tea bag. Although the container has a handle which enables the bag to be squeezed whilst submerged in the infusing liquid it is still necessary to manually handle the tea bag during insertion and removal from the container. Direct hand contact with the bag and/or the container is considered undesirable since it is both messy and potentially unhygienic, increasing the risk of introducing dirt and microbes into the infused substance.

The present invention seeks to provide a new and inventive form of device for use with bags of an infusible substance, in which:
a) the bag can easily be engaged with the device with little or no manual handling;
b) the device enables the infusion process to be controlled such that a good strong infusion may be obtained when required, or a weaker one if the user so wishes;
c) the bag is firmly held throughout the process;
d) the bag can be effectively squeezed to expel excess liquid when infusion is complete; and
e) the user can easily remove the bag from the device at the end of the process.

### SUMMARY OF THE INVENTION

The present invention provides an infusing device as defined in claim 1.

The present tool firmly holds the bag whilst at the same time facilitating easy engagement and disengagement with the bag with little or no manual handling of the bag and no manual contact with the receptacle. The receptacle allows circulation of liquid during infusion, whilst the squeezing head provides very effective squeezing of the bag to expel liquid. In addition, the squeezing head may be used to knead the bag and increase the flow of liquid through the contents during infusion, if desired.

### BRIEF DESCRIPTION OF THE DRAWINGS

The following description and the accompanying drawings referred to therein are included by way of non-limiting example in order to illustrate how the invention may be put into practice. In the drawings:
Figure 1 is a general view of a first infusing device in accordance with the invention;
Figure 2 is an axial section through part of the infusing device showing one possible internal configuration;
Figure 3 is another axial section through the infusing device showing an alternative internal configuration;
Figure 4 is a general view of a second form of infusing device in accordance with the invention;
Figure 5 is a general view of a third form of infusing device in accordance with the invention;
Figure 6 is an axial section through part of the third infusing device;
Figure 7 is a general view of a fourth form of infusing device in accordance with the invention;
Figure 8 is an axial section through the fourth infusing device;
Figure 9 is part of the axial section of Fig. 7 showing the cage in an open configuration;
Figure 10 is a general view of a fifth form of infusing device in accordance with the invention.

### DETAILED DESCRIPTION OF THE DRAWINGS

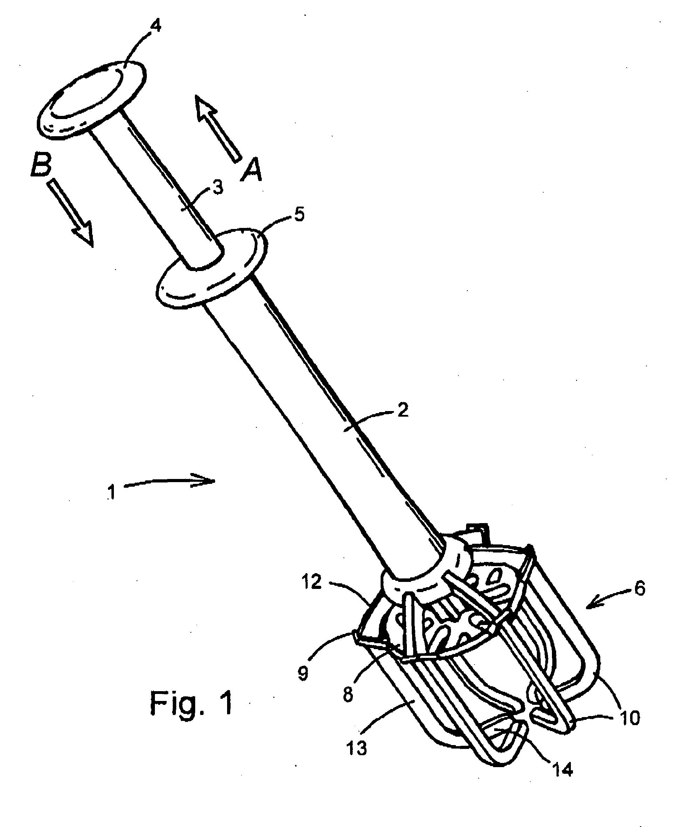

Referring firstly to **Fig. 1****,** the first form of infusing device 1 has a generally elongate cylindrical handle 2 which contains an axially movable plunger 3. The plunger projects from one end of the handle, terminating in an operating knob 4, and the adjacent end of the handle 2 is provided with an annular projecting flange 5. At the opposite end, the handle 2 is provided with a cage 6 forming a receptacle for a tea bag or similar bag-like container filled with an infusible particulate substance. The plunger 3 also projects from this end of the handle 2 to carry a co-axially mounted generally disc-shaped squeezing head 8. The head may be solid or formed with a number of apertures allowing liquid to pass through. The cage 6 is formed by claw-like elements 10 (six in this example) which may be formed of a tough, heat-resistant, substantially rigid plastic such as polyamide, or any other suitable material. The elements 10 have inclined portions 12, which diverge outwardly from the handle, leading into substantially straight and parallel axial portions 13, which in turn join tip portions 14 which are directed radially inwards, substantially meeting at the axis of the handle. The axial portions 13 pass through circumferentially-spaced peripheral apertures 9 in the squeezing head 8.

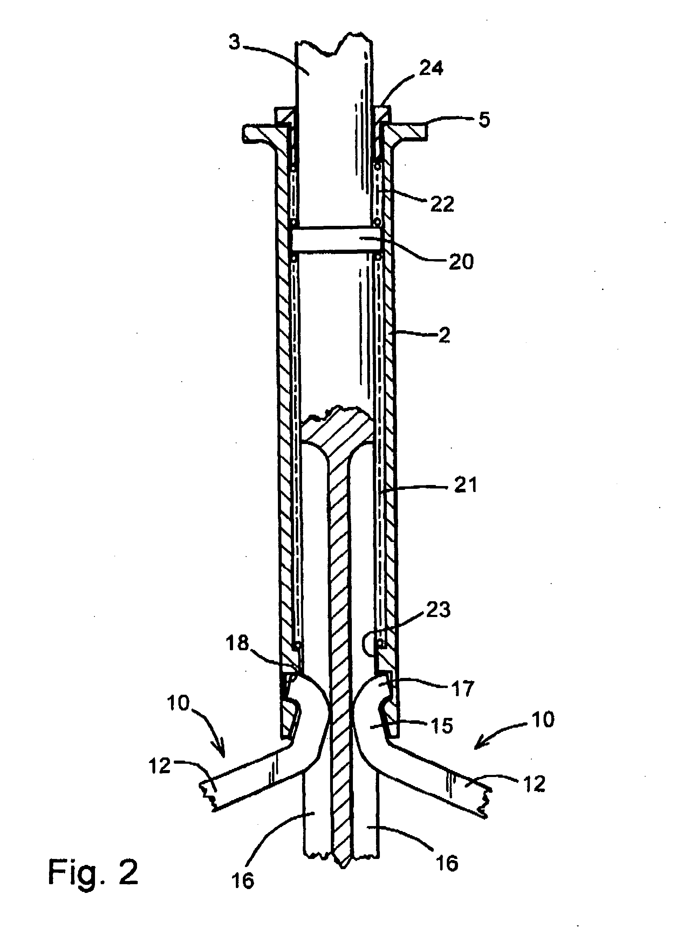

The sectional view of **Fig. 2** shows one internal configuration of the device. In this embodiment the inner ends of the cage elements 10 are inserted into the end of the handle 2, being received within axial grooves 16 in the plunger 3. Inside the handle, the inclined portions 12 of the elements 10 lead into short generally axial portions 15 which terminate in hook-like out-turned anchoring portions 17 which are pivotally located in a common circumferential recess 18, or separate circumferentially-spaced recesses, formed inside the handle 2. The plunger 3 is provided with an annular abutment 20 within the handle 2, and the handle contains oppositely-acting first and second compression springs 21 and 22, received in an annular space between the handle and the plunger 3. The first spring 21 acts between the abutment 20 and an internal shoulder 23 formed in the handle 3 towards the recess 18, while the second spring 22 acts between the abutment 20 and a further abutment such as an end plug 24 which is screwed or otherwise secured within the end of the handle 3 adjacent to the flange 5.

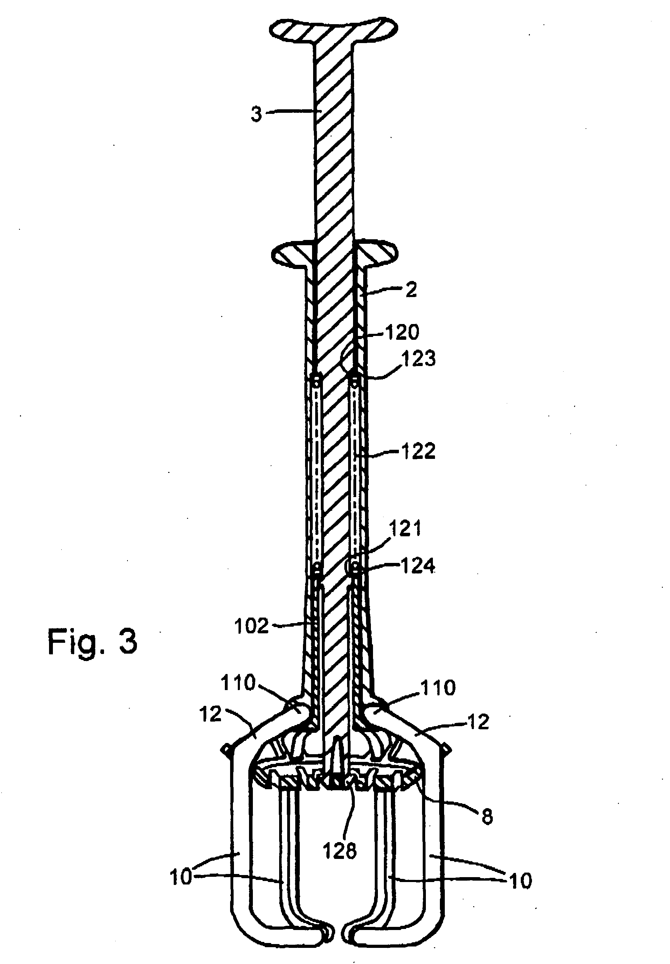

The alternative internal embodiment which is shown in **Fig. 3** only uses a single spring and is somewhat easier to assemble in mass production. In this embodiment the inner ends of the cage elements 10 are held between the end of the handle 2 and a flange-headed tubular insert 102. The insert may be secured within the end of the handle 2 by friction, snap-engagement, adhesive, etc.. The inclined portions 12 of the elements 10 terminate in pivot heads 110 which are pivotally received in respective recesses formed between the end of the handle 2 and the flanged end of the insert 102. The plunger 3 is provided with spaced annular abutments 120 and 121 within the handle 2, and a compression spring 122 is received in an annular space between the handle and the plunger 3 with opposite ends of the spring acting against the abutments 120 and 121, either directly or via bearing washers. The ends of the compression spring also act between internal shoulders 123 and 124 formed in the handle 3, one of which may conveniently be provided by the inner end of the insert 102. It will thus be appreciated that when the plunger 3 is moved in either direction within the handle 2 (towards or away from the cage 6) the spring 122 will be compressed between one of the abutments 120, 121 and the opposing shoulder 123 or 124 at the opposite end of the spring. The plunger 3 will therefore always tend to return to the equilibrium position shown. Assembly is assisted by forming the squeezing head 8 separate from the plunger 3, with which the head is engaged by means of an arrowhead connector 128.

Referring back to **Fig. 1****,** if the handle 2 is held in one hand and the knob 4 is pulled in direction A against the action of the second spring 22, using the other hand for example, the squeezing head 8 will move towards the handle and start to travel along the divergent portions 12 of the elements 10 causing the elements to pivot radially outwards. The tip portions 14 will therefore move apart allowing a tea bag or the like to be inserted into the cage formed by the elements 10. When the knob 4 is released the spring 22 will return the plunger 3 to the equilibrium position causing the elements 10 to return to the position illustrated in **Fig. 1** and thus close around the tea bag. The number and relative spacing of the elements 10 should be sufficient to prevent the bag from dropping out of the cage.

The tea bag can now be inserted into hot water, held within the device. The cage 6 allows the water to circulate freely around and through the tea bag so that the dried tea leaves contained within the bag infuse through the porous wall of the bag. If a medium to strong beverage is required the infusion process can be assisted by agitating the device within the water. Furthermore, by depressing the knob in the direction of the cage 6 against the first spring 21, as indicated by the arrow B, the tea bag can be compressed between the squeezing head 8 and the inwardly-directed tip portions 14 of elements 10, thereby "pumping" water through the contents of the bag. This may conveniently be carried out by placing the first and second fingers of one hand on opposite sides of the handle 2 bearing against the flange 5 whilst pressing the thumb against the end of the knob 4.

When the infusion process is complete the device can be used to lift the bag from the water. During this final step the knob 4 can again be depressed towards the cage 6 so that the bag is squeezed between the squeezing head 8 and the tip portions 14 of the cage 6, thereby expelling any surplus liquid from the bag. As a result, the tea bag is largely free from drips and can easily be moved to a suitable waste container. Release of the used tea bag is assisted by pulling the knob 4 away from the cage to open the elements 10, as described. The compressed bag will either drop out of the cage or can be removed with the assistance of a slight shaking action.

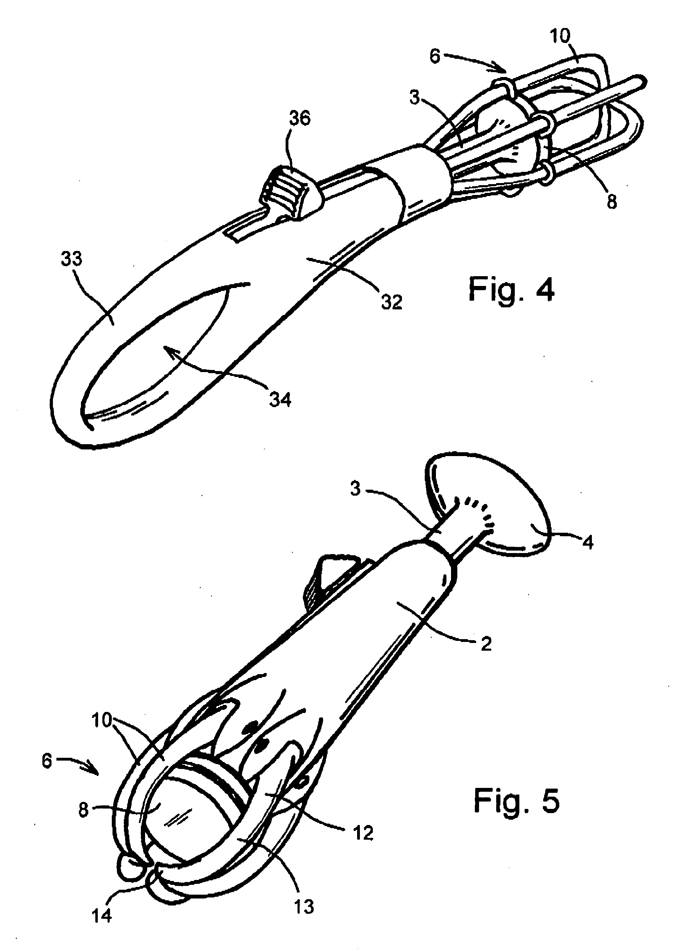

The second form of infusing device 10, which is shown in **Fig. 4****,** also has a generally elongate handle 32, but in this case the handle is designed to be held and operated using one hand. The internal arrangement of the handle, plunger 3, and the general arrangement of the squeezing head 8 and cage 6 formed by elements 10, may be substantially as described in relation to **Fig.s 1** to **3** above. The handle 32 has an enlarged and flattened end 33 to sit comfortably in the palm of the hand, and may be formed with a recessed area 34 to ensure that the handle is correctly balanced. The plunger 3 can be moved back and forth by means of a knob 36, which may, for example, be secured to the internal abutment 20 of the plunger 3 to project laterally through an axial slot 37 in the top side of the handle for operation by the user's thumb. Again, the plunger 3 is biased to an equilibrium position between oppositely-acting spring elements so that moving the knob 36 away from the cage 6 will open the elements 10, while moving the knob in the opposite direction enables a tea bag held in the cage to be squeezed between the squeezing head 8 and the inwardly-directed tips of the cage elements 10.

A further modified form of infusing device described above is illustrated in **Fig.s 5** **and** **6****.** This device also has a generally elongate cylindrical handle 2 which contains an axially movable plunger 3. The plunger projects from one end of the handle, terminating in an operating knob 4. At the opposite end, the handle 2 is provided with a cage 6 for receiving a tea bag or similar item. The plunger 3 also projects from this end of the handle 2 to carry a co-axially mounted generally disc-shaped squeezing head 8. The cage 6 is formed by a number of claw-like elements 10 which, although smoothly curved and less angular than the elements 10 of **Fig. 1****,** again have inclined portions 12, which diverge outwardly from the handle, leading into generally parallel axial portions 13, which in turn join inwardly-directed tip portions 14 substantially meeting at the axis of the handle. The elements 10 are spaced about the periphery of the squeezing head 8 without being connected therewith.

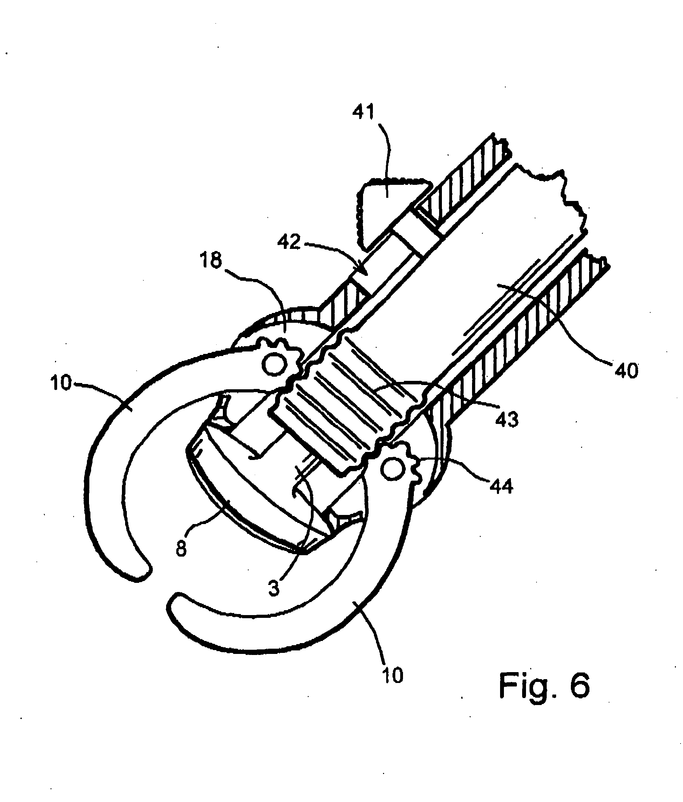

Referring particularly to the sectional view of **Fig. 6****,** the inner ends of the cage elements 10 are pivotally mounted within enlarged recesses 18 in the end of the handle 2. Inside the handle, a sleeve 40 is slidably located about the plunger 3, being independently movable by means of a knob 41 which projects laterally through an axial slot 42 in the side of the handle 2 for operation by the user's thumb. The sleeve 40 is operably connected with the inner ends of the elements 10, for example by means of circumferential ribs 43 which engage teeth 44 disposed about the pivot axis of each element 10. The handle may contain respective spring elements (not shown) which bias the plunger 3 and the sleeve 40 away from the cage 6. Thus, if the knob is slid towards the cage 6 the elements 10 will move apart allowing a tea bag or the like to be inserted into the cage formed by the elements 10. When the knob 4 is released the spring will return the sleeve 40 to the starting position causing the elements 10 to return to the closed position illustrated in the drawings. Squeezing of the tea bag is similarly achieved by depressing the plunger 3 by means of the knob 4.

A fourth form of device is illustrated in **Fig.s 7 to 9****.** This form of the device has an elongate bullet-shaped handle 2 which contains an axially movable plunger 3. The plunger projects from one end of the handle, terminating in an operating knob 4. At the opposite end, the handle 2 is provided with a cage 6 for receiving a tea bag or similar item. In this embodiment the handle 2 is formed such that the end of the handle provides a generally disc-shaped squeezing head 48. The cage 6 is formed by a number of claw-like elements 10 having inclined portions 12, which diverge outwardly from the handle, leading into generally parallel axial portions 13, which in turn join inwardly-directed tip portions 14 substantially meeting at the axis of the handle. The elements 10 are spaced about the periphery of the squeezing head 48.

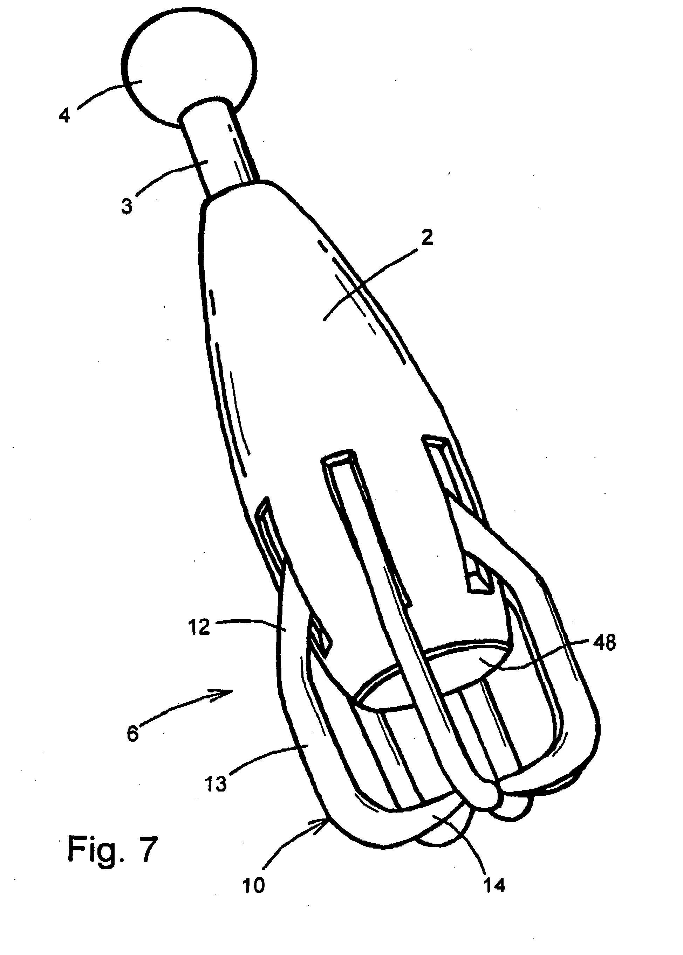

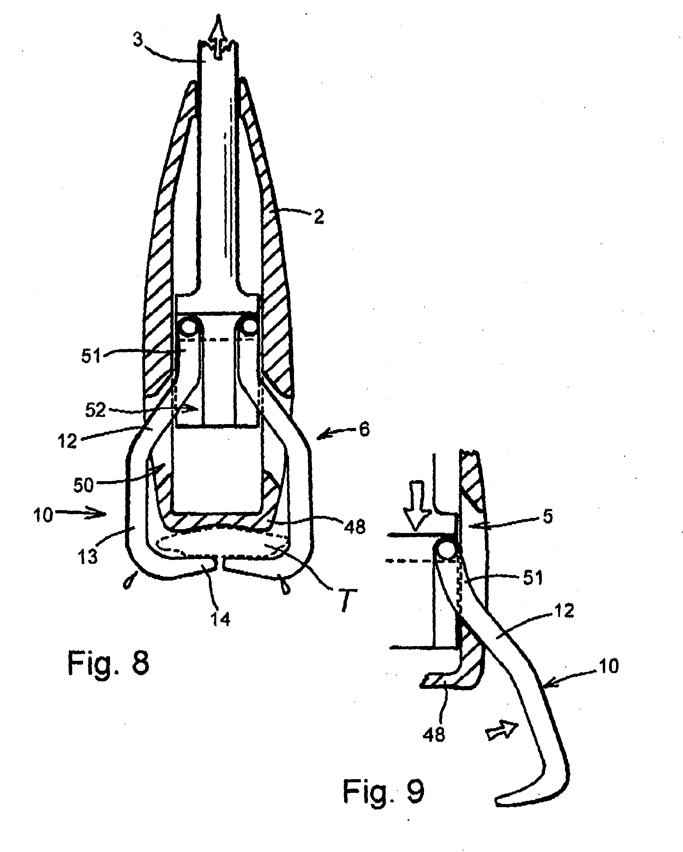

Referring to the sectional view of **Fig. 8****,** the divergent portions 12 pass through axially-extending slot-like apertures 50 in the side of the handle 2 wherein the inner ends 51 of the cage elements 10 extend generally parallel to the axial portions 13 and are pivotally connected within axial recesses 52 in the plunger 3. The handle may contain respective spring elements (not shown) which bias the plunger 3 to the position shown in **Fig. 7****,** mid-way between the positions shown in **Fig.s 8 and 9****.** If the knob 4 is pushed towards the cage 6 the divergent portions 12 engage the ends of the slots 50 adjacent to the squeezing head 48 as shown in **Fig. 9****,** causing the cage elements 10 to move apart allowing a tea bag or the like to be inserted into the cage. When the knob 4 is released the spring will return the plunger 3 to the starting position causing the elements 10 to return to the intermediate closed position illustrated in **Fig. 7****.** Squeezing of the tea bag is achieved by pulling the knob 4 out of the handle 2 so that the divergent portions 12 travel rearwards along the slots 50 to squeeze the bag T between the head 48 and the tip portions 14, as shown in **Fig. 8****.** During the squeezing process the cage elements 10 are restrained from moving outwards by reception of their axial inner ends 51 within the handle 2.

In each of the tools described above the number of cage elements may vary, generally between three and ten such elements being preferred.

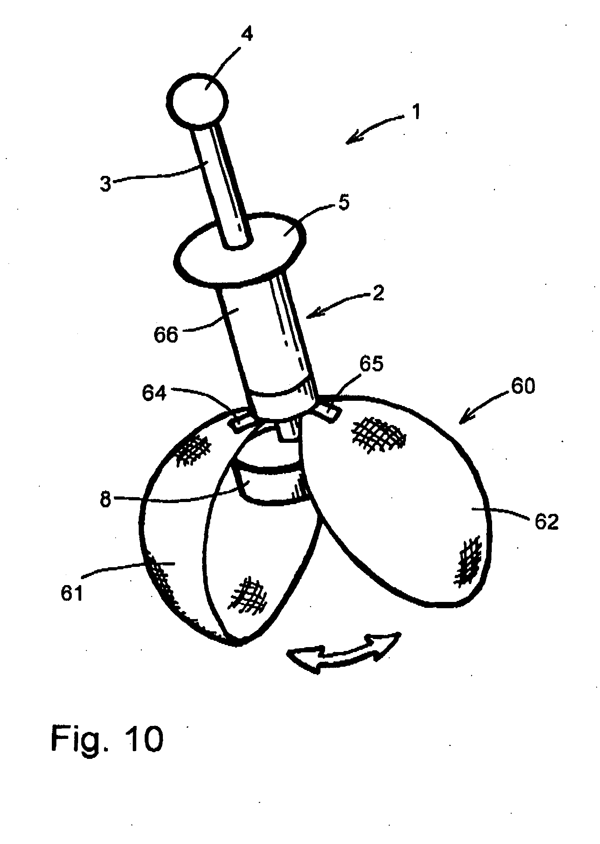

A fifth form of the infusing device 1 is shown in **Fig. 10****.** This device also has a generally elongate cylindrical handle 2 which contains an axially movable plunger 3. The plunger projects from one end of the handle, terminating in an operating knob 4, and the adjacent end of the handle 2 is provided with an annular projecting flange 5. At the opposite end, the handle 2 is provided with a receptacle 60 for a tea bag or similar bag-like container filled with an infusible particulate substance. The plunger 3 also projects from this end of the handle 2 to carry a co-axially mounted generally disc-shaped squeezing head 8. The receptacle 60 is formed of two generally hemispherical parts 61 and 62, which may be formed of metal or substantially rigid plastic, containing a multiplicity of holes or mesh-like perforations. The two parts 61 and 62 are secured to the adjacent end of handle 2, on opposite sides of the head 8, by means of spring elements 64 and 65 such that the two parts are biased towards an open angularly divergent position, as shown. An outer sleeve 66 is located about the handle 2, being axially slidable between upper and lower click-stop positions. In the upper position shown, the lower end of the sleeve is clear of the receptacle 60, but if the sleeve is slid towards the lower stop position the leading end of the sleeve engages the two parts of the receptacle 60 causing the two parts 61 and 62 to move together to a closed, substantially spherical configuration.

The plunger 3 may be provided with an annular abutment inside the handle 2, and a compression spring located in an annular space between the handle and the plunger 3 acts against the abutment, biasing the head 8 towards the handle.

If the handle 2 is held in one hand the sleeve 66 can be slid axially, using the other hand if necessary, to open and close the receptacle 60. A tea bag or the like can be inserted into the infusing device by closing the two parts of the receptacle around the tea bag without requiring direct hand contact.

The tea bag can now be inserted into hot water or other liquid whilst being held within the receptacle. The holes in the receptacle allow liquid to circulate freely around and through the tea bag so that the dried tea leaves contained within the bag infuse through the porous wall of the bag. If a medium to strong beverage is required the infusion process can be assisted by agitating the device within the water. Furthermore, by depressing the knob 4 towards the receptacle 60 the tea bag can be compressed between the squeezing head 8 and the remote end of the receptacle, thereby "pumping" water through the contents of the bag. This can easily be carried out by placing the first and second fingers of one hand on opposite sides of the handle 2 bearing against the flange 5 whilst pressing the thumb against the knob 4.

When the infusion process is complete the device can be used to remove the tea bag from the water. During this final step the knob 4 can again be depressed towards the receptacle 60 so that the bag is squeezed between the head 8 and the receptacle to expel surplus liquid from the bag. As a result, the tea bag can be moved to a suitable waste container without risk of drips. Release of the used tea bag is achieved by sliding the sleeve 66 back towards the flange 5 to open the two parts of the receptacle, The compressed bag will either drop out of the receptacle or can be removed with the assistance of a slight shaking action.

Other means of opening and closing the two parts of the receptacle could be used. For example, the sleeve 66 could be engaged with the handle 2 via a coarse screw thread, enabling the receptacle to be opened and closed with a twisting action.

As noted above, the tools described herein can be used in the preparation of any infusion made from a substance contained within a porous bag. A portion of any infusible substance used in the preparation of beverages may be placed in the bag prior to sealing. In general, this will be a plant material such as leaves, petals or beans, which may be used In a divided form as obtained from the plant, dried or roasted. The most common material used in the preparation of Infused beverages is derived from the tea plant *camellia sinensis,* although other plant materials are sometimes used, including matte, chamomile, mint, vervien, linden, hibiscus, orange blossom, lemon grass, blackberry leaves, skullcap, verbena, comfrey and alfalfa. Ground roasted coffee beans may also be used.

## Claims

1. An infusing device having:
- a handle (2);
- a receptacle (6) mounted at one end of the handle, the receptacle being formed by a plurality of relatively moveable parts (10; 61, 62) which, in a closed configuration, define an infusion space for holding a bag containing an infusible substance whilst providing a plurality of openings through which liquid may pass into and out of the receptacle, said parts being so constructed and arranged as to be capable of being placed in an open configuration allowing passage of the bag in and out of the receptacle;
- a squeezing head (8) which projects from said handle to protrude into said infusion space within the receptacle:
and
- operating means (4, 3, B) for producing relative movement between the squeezing head and the receptacle, with the receptacle in said closed configuration, to squeeze the bag therein;
***characterised in that***
said parts (10: 61. 62) of the receptacle are all pivotally moveable relative to the handle and the handle is provided with actuating means (4, 3, A; 40, 41) which is manually operable to simultaneously move all of the parts of the receptacle between said open and closed configurations whereby the receptacle can be opened and closed by said actuating means to insert a bag of infusible substance into the receptacle.

2. An infusing device according to Claim 1 in which the handle (2) is of elongate shape and both the squeezing head and the receptacle are provided at one end of the handle.

3. An infusing device according to Claim 1 in which the operating means for producing relative movement between the squeezing head and the receptacle includes an inner member (3) which is movable within the handle.

4. An infusing device according to Claim 3 in which the inner member is movable against spring means (21; 122) to squeeze the bag between the squeezing head and the receptacle.

5. An infusing device according to Claim 4 in which said spring means (21; 122) is contained within the handle.

6. An infusing device according to Claim 5 in which said spring means comprises a coiled spring element (21; 122) which is located about the inner member, acting between the inner member and the handle.

7. An infusing device according to Claim 6 in which opposite ends of the spring element (122) are arranged to act against respective abutments (120, 121) which are fixed with the inner member and respective shoulders (123, 124) which are fixed with the handle so that movement of the inner member in either of two opposite directions compresses the spring element between one of said abutments and one of said shoulders.

8. An infusing device according to Claim 3 in which the inner member is biased to an equilibrium position between oppositely-acting spring elements (21, 22).

9. An infusing device according to Claim 3 in which the inner member can be moved relative to the handle by means of a knob (4) at the opposite end of the handle from the squeezing head.

10. An infusing device according to Claim 3 in which the inner member can be moved relative to the handle by means of a knob (36, 41) which is slidable along a longitudinally-extending slot in the handle.

11. An infusing device according to Claim 1 in which said parts (10; 61, 62) of the receptacle are disposed about the periphery of the squeezing head (8).

12. An infusing device according to Claim 11 in which the parts of the receptacle comprise a plurality of elongate elements (10).

13. An infusing device according to Claim 12 in which the elongate elements (10) are disposed at substantially equal intervals about the periphery of the squeezing head.

14. An infusing device according to Claim 12 in which the elongate elements (10) are pivotally connected at the handle.

15. An infusing device according to Claim 14 in which the actuating means (4, 3, A; 40, 41) is arranged to pivotally move the elongate elements (10) relative to each other to place the receptacle In said open configuration.

16. An infusing device according to Claim 15 in which the elongate elements (10) pass through apertures (9; 50) in the periphery of the squeezing head (8) whereby the elements are pivotally moved relative to each other by relative movement between the squeezing head and the elongate elements.

17. An infusing device according to Claim 16 in which the elongate elements include portions (12) which diverge outwardly from the handle whereby the elongate elements are pivotally moved by relative movement between the squeezing head and said outwardly divergent portions.

18. An infusing device according to Claim 16 in which the elongate elements include substantially parallel portions (13) followed by inwardly-directed portions (14).

19. An infusing device according to Claim 1 in which the parts of the receptacle comprise a plurality of relatively-movable perforated sections (61, 62).

20. An infusing device according to Claim 19 in which the perforated sections are annularly moveable relative to each other.

21. An infusing device according to Claim 20 in which the perforated sections (61, 62) move relative to each other about an axis which extends transverse to the handle (2).

22. An infusing device according to Claim 1 in which the squeezing head (8) is movable relative to the handle (2).

23. An infusing device according to Claim 1 in which the squeezing head (8) is fixed relative to the handle (2).

24. An infusing device according to Claim 1 in which the actuating means (40, 41) acts independently of the operating means (4, 3, A).

25. An infusing device according to Claim 24 in which the actuating means comprises a sleeve (40) which is disposed within the handle (2).

26. An infusing device according to Claim 25 in which the sleeve (40) is connected to a knob (41) which is slidable along a longitudinally-extending slot in the handle.

## Patentansprüche

1. Aufgussvorrichtung mit:
- einem Handgriff (2);
- einer Aufnahme (6), die an einem Ende des Handgriffs montiert ist, wobei die Aufnahme durch eine Mehrzahl von relativ bewegbaren Teilen (10; 61, 62) gebildet ist, die, in einer geschlossenen Konfiguration, einen Aufgussraum zum Halten eines Beutels definieren, der eine aufgiessbare Substanz enthält, während eine Mehrzahl von Öffnungen zur Verfügung gestellt wird, durch die Flüssigkeit in und aus der Aufnahme strömen kann, wobei die Teile so konstruiert und angeordnet sind, um in einer offenen Konfiguration angeordnet zu werden, die das Überführen des Beutels in und aus der Aufnahme ermöglicht;
- einem Quetschkopf (8), der von dem Handgriff vorsteht, um in den Aufgussraum in der Aufnahme hinein zu ragen; und
- einem Bedienungsmittel (4, 3, B), um eine relative Bewegung zwischen dem Quetschkopf und der Aufnahme zu bewirken, wenn sich die Aufnahme in der geschlossenen Konfiguration befindet, um den Beutel darin zu quetschen;
**dadurch gekennzeichnet, dass**
die Teile (10; 61, 62) der Aufnahme alle relativ zu dem Handgriff schwenkbar bewegbar sind und der Handgriff mit einem Betätigungsmittel (4, 3, A; 40, 41) versehen ist, das manuell betätigbar ist, um gleichzeitig alle Teile der Aufnahme zwischen der offenen und der geschlossenen Konfiguration zu bewegen, wodurch die Aufnahme durch das Betätigungsmittel geöffnet und geschlossen werden kann, um einen Beutel mit der aufgiessbaren Substanz in die Aufnahme einzusetzen.

2. Aufgussvorrichtung nach Anspruch 1, bei der der Handgriff (2) eine längliche Form hat und sowohl der Quetschkopf als auch die Aufnahme an einem Ende des Handgriffs vorgesehen sind.

3. Aufgussvorrichtung nach Anspruch 1, bei der das Bedienungsmittel zum Erzeugen einer relativen Bewegung zwischen dem Quetschkopf und der Aufnahme ein inneres Bauteil (3) aufweist, das in dem Handgriff bewegbar ist.

4. Aufgussvorrichtung nach Anspruch 3, bei der das innere Bauteil gegen ein Federmittel (21; 122) bewegbar ist, um den Beutel zwischen dem Quetschkopf und der Aufnahme zu quetschen.

5. Aufgussvorrichtung nach Anspruch 4, bei der das Federmittel (21; 122) in dem Handgriff enthalten ist.

6. Aufgussvorrichtung nach Anspruch 5, bei der das Federmittel ein Schraubenfederelement (21; 122) aufweist, das um das innere Bauteil herum angeordnet ist und das zwischen dem inneren Bauteil und dem Handgriff wirkt.

7. Aufgussvorrichtung nach Anspruch 6, bei der gegenüberliegende Enden des Federelements (122) ausgestaltet sind, um gegen zugehörige Anschläge (120, 121), die mit dem inneren Bauteil feststehend sind, und zugehörige Schultern (123, 124) zu wirken, die mit dem Handgriff feststehend sind, so dass das Federelement durch eine Bewegung des inneren Bauteils in jede der beiden entgegen gesetzten Richtungen zwischen einem der Anschläge und einer der Schultern zusammengedrückt wird.

8. Aufgussvorrichtung nach Anspruch 3, bei der das innere Bauteil in eine Gleichgewichtsposition zwischen entgegengesetzt wirkenden Federelementen (21, 22) vorgespannt ist.

9. Aufgussvorrichtung nach Anspruch 3, bei der das innere Bauteil relativ zu dem Handgriff mit Hilfe eines Knopfes (4) bewegt werden kann, der an dem Ende des Handgriffs vorgesehen ist, das dem Quetschkopf gegenüberliegt.

10. Aufgussvorrichtung nach Anspruch 3, bei der das innere Bauteil relativ zu dem Handgriff mit Hilfe eines Knopfes (36, 41) bewegt werden kann, der entlang eines in Längsrichtung verlaufenden Schlitzes in dem Handgriff verschiebbar ist.

11. Aufgussvorrichtung nach Anspruch 1, bei der die Teile (10; 61, 62) der Aufnahme um den Umfang des Quetschkopfes (8) herum vorgesehen sind.

12. Aufgussvorrichtung nach Anspruch 11, bei der die Teile der Aufnahme eine Mehrzahl von länglichen Elementen (10) aufweisen.

13. Aufgussvorrichtung nach Anspruch 12, bei der die länglichen Elemente (10) in im Wesentlichen gleichen Intervallen um den Umfang des Quetschkopfes herum angeordnet sind.

14. Aufgussvorrichtung nach Anspruch 12, bei der die länglichen Elemente (10) schwenkbar mit dem Handgriff verbunden sind.

15. Aufgussvorrichtung nach Anspruch 14, bei der das Betätigungsmittel (4, 3, A; 40, 41) ausgestaltet ist, um die länglichen Elemente (10) relativ zueinander schwenkbar zu bewegen, um die Aufnahme in die offene Konfiguration zu bringen.

16. Aufgussvorrichtung nach Anspruch 15, bei der die länglichen Elemente (10) durch Öffnungen (9; 50) im Umfang des Quetschkopfes (8) verlaufen, wodurch die Elemente durch eine relative Bewegung zwischen dem Quetschkopf und den länglichen Elementen relativ zueinander schwenkbar bewegbar.

17. Aufgussvorrichtung nach Anspruch 16, bei der die länglichen Elemente Bereiche (12) aufweisen, die von dem Handgriff nach außen divergieren, wobei die länglichen Elemente durch eine relative Bewegung zwischen dem Quetschkopf und den nach außen divergierenden Bereichen schwenkbar bewegt werden.

18. Aufgussvorrichtung nach Anspruch 16, bei der die länglichen Elemente im Wesentliche parallele Bereiche (13) gefolgt von nach innen gerichteten Bereichen (14) aufweisen.

19. Aufgussvorrichtung nach Anspruch 1, bei der die Teile der Aufnahme eine Mehrzahl von relativ bewegbaren, perforierten Abschnitten (61, 62) aufweisen.

20. Aufgussverrichtung nach Anspruch 19, bei der die perforierten Abschnitte relativ zueinander im Winkel bewegbar sind.

21. Aufgussvorrichtung nach Anspruch 20, bei der sich die perforierten Abschnitte (61, 62) relativ zueinander um eine Achse bewegen, die quer zum Handgriff (2) verläuft.

22. Aufgussvorrichtung nach Anspruch 1, bei der der Quetschkopf (8) relativ zum Handgriff (2) bewegbar ist.

23. Aufgussvorrichtung nach Anspruch 1, bei der der Quetschkopf (8) relativ zum Handgriff (2) feststehend ist.

24. Aufgussvorrichtung nach Anspruch 1, bei der das Betätiqungsmittel (40, 41) unabhängig von dem Bedienungsmittel (4, 3, A) wirkt.

25. Aufgussvorrichtung nach Anspruch 24, bei der das Betätigungsmittel eine Hülse (40) aufweist, die in dem Handgriff (2) angeordnet ist.

26. Aufgussvorrichtung nach Anspruch 25, bei der die Hülse (40) mit einem Knopf (41) verbunden ist, der entlang eines in Längsrichtung verlaufenden Schlitzes in dem Handgriff verschiebbar ist.

## Revendications

1. Dispositif d'infusion comportant :
- une poignée (2) ;
- un réceptacle (6) monté à une extrémité de la poignée, le réceptacle étant formé par une pluralité de parties (10 ; 61, 62) pouvant être déplacées les unes par rapport aux autres qui, dans une configuration fermée, définissent un espace d'infusion pour maintenir un sachet contenant une substance apte à infuser tout en fournissant une pluralité d'ouvertures à travers lesquelles un liquide peut passer à l'intérieur et hors du réceptacle, lesdites parties étant construites et agencées de façon à être aptes à être placées dans une configuration ouverte permettant un passage du sachet à l'intérieur et hors du réceptacle ;
- une tête presseuse (8) qui se projette à partir de ladite poignée pour faire saillie dans ledit espace d'infusion à l'intérieur du réceptacle ;
et
- des moyens opérationnels (4, 3, B) pour produire un mouvement relatif entre la tête presseuse et le réceptacle, avec le réceptacle dans ladite configuration fermée, pour presser le sachet dans celui-ci ;
***caractérisé par le* fait que** :
lesdites parties (10 ; 61, 62) du réceptacle sont toutes déplaçables de marnière pivotante par rapport à la poignée et la poignée comprend des moyens d'actionnement (4 , 3, A ; 40, 41) qui peuvent être actionnés manuellement pour déplacer simultanément toutes les parties du réceptacle entre lesdites configurations ouverte et fermée, ce par quoi le réceptacle peut être ouvert et fermé par lesdits moyens d'actionnement pour introduire un sachet de substance apte à infuser à l'intérieur du réceptacle.

2. Dispositif d'infusion selon la revendication 1, dans lequel la poignée (2) est de forme allongée et la tête presseuse et le réceptacle sont tous les deux disposés à une extrémité de la poignée.

3. Dispositif d'infusion selon la revendication 1, dans lequel les moyens opérationnels pour produire un mouvement relatif entre la tête presseuse et le réceptacle comprennent un élément interne (3) qui est mobile à l'intérieur de la poignée.

4. Dispositif d'infusion selon la revendication 3, dans lequel l'élément interne est mobile contre des moyens de ressort (21 ; 122) pour presser le sachet entre la tête presseuse et le réceptacle.

5. Dispositif d'infusion selon la revendication 4, dans lequel lesdits moyens de ressort (21 ; 122) sont contenus à l'intérieur de la poignée.

6. Dispositif d'infusion selon la revendication 5, dans lequel lesdits moyens de ressort comprennent un élément de ressort hélicoïdal (21 ; 122) qui est situé vers l'élément interne, agissant entre l'élément interne et la poignée.

7. Dispositif d'infusion selon la revendication 6, dans lequel des extrémités opposées de l'élément de ressort (122) sont agencées pour agir contre des butées respectives (120, 121) qui sont fixées avec l'élément interne et des épaulements respectifs (123, 124) qui sont fixés avec la poignée de telle sorte qu'un mouvement de l'élément interne dans l'une ou l'autre des deux directions opposées comprime l'élément de ressort entre une desdites butées et un desits épaulements.

8. Dispositif d'infusion selon la revendication 3, dans lequel l'élément interne est sollicité dans une position d'équilibre entre des éléments de ressort agissant de façon opposée (21, 22).

9. Dispositif d'infusion selon la revendication 3, dans lequel l'élément interne peut être déplacé par rapport à la poignée au moyen d'un bouton (4) à l'extrémité opposée de la poignée à partir de la tête presseuse.

10. Dispositif d'infusion selon la revendication 3, dans lequel l'élément interne peut être déplacé par rapport à la poignée au moyen d'un bouton (36, 41) qui est coulissant le long d'une fente s'étendant longitudinalement dans la poignée.

11. Dispositif d'infusion selon la revendication 1, dans lequel lesdites parties (10 ; 61, 62) du réceptacle sont disposées vers la périphérie de la tête presseuse (8).

12. Dispositif d'infusion selon la revendication 11, dans lequel les parties du réceptacle comprennent une pluralité d'éléments allongés (10).

13. Dispositif d'infusion selon la revendication 12, dans lequel les éléments allongés (10) sont disposés à des intervalles sensiblement égaux vers la périphérie de la tête presseuse.

14. Dispositif d'infusion selon la revendication 12, dans lequel les éléments allongés (10) sont reliés de manièe pivotante à la poignée.

15. Dispositif d'infusion selon la revendication 14, dans lequel les moyens d'actionnement (4, 3, A ; 40, 41) sont agencés pour déplacer de manière pivotante les éléments allongés (10) les uns par rapport aux autres pour placer le réceptacle dans ladite configuration ouverte.

16. Dispositif d'infusion selon la revendication 15, dans lequel les éléments allongés (10) passent à travers des ouvertures (9, 50) dans la périphérie de la tête presseuse (8), ce par quoi les éléments sont déplacés de manière pivotante les uns par rapport aux autres par mouvement relatif entre la tête presseuse et les éléments allongés.

17. Dispositif d'infusion selon la revendication 16, dans lequel les éléments allongés comprennent des parties (12) qui divergent vers l'extérieur à partir de la poignée, ce par quoi les éléments allongés sont déplacés de manière pivotante par mouvement relatif entre la tête presseuse et lesdites parties divergentes vers l'extérieur.

18. Dispositif d'infusion selon la revendication 16, dans lequel les éléments allongés comprennent des parties sensiblement parallèles (13) suivies par des parties dirigées vers l'intérieur (14).

19. Dispositif d'infusion selon la revendication 1, dans lequel les parties du réceptacle comprennent une pluralité de sections perforées déplaçables les unes par rapport aux autres (61, 62).

20. Dispositif d'infusion selon la revendication 19, dans lequel les sections perforées sont déplaçables de manière angulaire les unes par rapport aux autres.

21. Dispositif d'infusion selon la revendication 20, dans lequel les sections perforées (61, 62) se déplacent les unes par rapport aux autres autour d'un axe qui s'étend transversalement à la poignée (2).

22. Dispositif d'infusion selon la revendication 1, dans lequel la tête presseuse (8) est déplaçables par rapport à la poignée (2).

23. Dispositif d'infusion selon la revendication dans lequel la tête presseuse (8) est fixée par rapport à la poignée (2).

24. Dispositif d'infusion selon la revendication 1, dans lequel les moyens d'actionnement (40, 41) agissent indépendamment des moyens opérationnels (4, 3, A).

25. Dispositif d'infusion selon la revendication 24, dans lequel les moyens d'actionnement comprennent un manchon (40) qui est disposés à l'intérieur de la poignée (2) .

26. Dispositif d'infusion selon la revendication 25, dans lequel le manchon (40) est relié un bouton (41) qui est coulissant le long d'une fente s'étendant longitudinalement dans la poignée.
